# EUROPEAN PATENT SPECIFICATION

(11) **EP 4 241 420 B1**
(45) Date of publication and mention of the grant of the patent: **14.10.2026**
(21) Application number: 21755217.3
(22) Date of filing: 21.07.2021
(51) Int. Cl.: H04L 9/40, H04W 12/08, H04L 9/32, H04L 47/22, H04L 47/32, H04L 47/70

(54) **METHODS, SYSTEMS, AND COMPUTER READABLE MEDIA FOR UTILIZING NETWORK FUNCTION IDENTIFIERS TO IMPLEMENT INGRESS MESSAGE RATE LIMITING**
VERFAHREN, SYSTEME UND COMPUTERLESBARE MEDIEN ZUR VERWENDUNG VON NETZWERKFUNKTIONSIDENTIFIKATOREN ZUR IMPLEMENTIERUNG VON EINGANGSNACHRICHTENRATENBEGRENZUNG
PROCÉDÉS, SYSTÈMES ET SUPPORTS LISIBLES PAR ORDINATEUR POUR UTILISER DES IDENTIFIANTS DE FONCTION DE RÉSEAU POUR METTRE EN OEUVRE UNE LIMITATION DE DÉBIT DE MESSAGES D'ENTRÉE

(30) Priority: 06.11.2020 IN 202041048552; 13.11.2020 IN 202041049614; 21.12.2020 US 202017129487; 28.12.2020 US 202017134635
(43) Date of publication of application: 13.09.2023
(73) Proprietor: Oracle International Corporation, Redwood Shores, CA 94065 (US)
(72) Inventor: RAJPUT, Jay, Bangalore 560103 (IN); MAHALANK, Shashikiran, Bhalachandra, Bangalore 560076 (IN); SRIVASTAVA, Ankit, Gorakhpur 273014 (IN)
(74) Representative: Gill Jennings & Every LLP
(86) International application number: PCT/US2021/042662
(87) International publication number: WO 2022/098405

(56) References cited:
- "3 Generation Partnership Project; Technical Specification Group Services and System Aspects; Security architecture and procedures for 5G system (Release 16)", vol. SA WG3, no. V16.3.0, 10 July 2020 (2020-07-10), pages 1 - 248, XP051924931, Retrieved from the Internet <URL:ftp://ftp.3gpp.org/Specs/archive/33_series/33.501/33501-g30.zip 33501-g30.doc> [retrieved on 20200710]
- "3rd Generation Partnership Project; Technical Specification Group Services and System Aspects; Security Aspects; Study on security aspects of the 5G Service Based Architecture (SBA) (Release 16)", no. V16.0.0, 8 July 2020 (2020-07-08), pages 1 - 104, XP051924305, Retrieved from the Internet <URL:ftp://ftp.3gpp.org/Specs/archive/33_series/33.855/33855-g00.zip 33855-g00.doc> [retrieved on 20200708]
- "3rd Generation Partnership Project; Technical Specification Group Core Network and Terminals; 5G System; Technical Realization of Service Based Architecture; Stage 3 (Release 17)", vol. CT WG4, no. V17.0.0, 24 September 2020 (2020-09-24), pages 1 - 82, XP051960940, Retrieved from the Internet <URL:ftp://ftp.3gpp.org/Specs/archive/29_series/29.500/29500-h00.zip 29500-h00.docx> [retrieved on 20200924]

## Description

### PRIORITY CLAIM

This application claims the priority benefit of U.S. Patent Application Serial No. 17/134,635, filed December 28, 2020, U.S. Patent Application Serial No. 17/129,487, filed December 21, 2020, Indian Provisional Patent Application Serial No. 202041049614, filed November 13, 2020, and Indian Provisional Patent Application Serial No. 202041048552, filed November 6, 2020.

### TECHNICAL FIELD

The subject matter described herein relates to enhancing security in 5G communication networks. More particularly, the subject matter described herein relates to methods, systems, and computer readable media for utilizing network function identifiers to implement ingress message rate limiting.

### BACKGROUND

In 5G telecommunications networks, the network node that provides service is referred to as a producer network function (NF). A network node that consumes services is referred to as a consumer NF. A network function can be both a producer NF and a consumer NF depending on whether it is consuming or providing service.

A given producer NF may have many service endpoints, where a service endpoint is the point of contact for one or more NF instances hosted by the producer NF. The service endpoint is identified by a combination of Internet protocol (IP) address and port number or a fully qualified domain name that resolves to an IP address and port number on a network node that hosts a producer NF. An NF instance is an instance of a producer NF that provides a service. A given producer NF may include more than one NF instance. It should also be noted that multiple NF instances can share the same service endpoint.

Producer NFs register with a network function repository function (NRF). The NRF maintains service profiles of available NF instances identifying the services supported by each NF instance. Consumer NFs can subscribe to receive information about producer NF instances that have registered with the NRF. In addition to consumer NFs, another type of network node that can subscribe to receive information about NF service instances is a service communication proxy (SCP). The SCP subscribes with the NRF and obtains reachability and service profile information regarding producer NF service instances. Consumer NFs connect to the SCP, and the SCP load balances traffic among producer NF service instances that provide the required service or directly routes the traffic to the destination producer NF instance.

In addition to the SCP, other examples of intermediate proxy nodes or groups of network nodes that route traffic between producer and consumer NFs include the security edge protection proxy (SEPP), the service gateway, and nodes in the 5G service mesh. The SEPP is the network node used to protect control plane traffic that is exchanged between different 5G public land mobile networks (PLMNs). As such, the SEPP performs message filtering, policing, and topology hiding for all application programming interface (API) messages.

However, there exists a need for improved security measures at one or more NFs.

3 Generation Partnership Project; Technical Specification Group Services and System Aspects; Security architecture and procedures for 5G system (Release 16)", vol. SA WG3, no. V16.3.0, (20200710), pages 1 - 248, 3GPP STANDARD; TECHNICAL SPECIFICATION; 3GPP TS 33.501, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, URL: ftp://ftp.3gpp.org/Specs/archive/33_series/33.501/33501-g30.zip 33501-g30.doc, (20200710), XP051924931 discloses the security features and the security mechanisms for the 5G System and the 5G Core, and the security procedures performed within the 5G System including the 5G Core and the 5G New Radio.

3rd Generation Partnership Project; Technical Specification Group Services and System Aspects; Security Aspects; Study on security aspects of the 5G Service Based Architecture (SBA) (Release 16)", no. V16.0.0, (20200708), pages 1 - 104, 3GPP STANDARD; TECHNICAL REPORT; 3GPP TR 33.855, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, URL: ftp://ftp.3gpp.org/Specs/archive/33_series/33.855/33855-g00.zip 33855-g00.doc, (20200708), XP051924305 discloses a review of the interactions in the new 5G service based architecture (SBA) and determines key issues relating to the security of SBA elements and interfaces.

### SUMMARY

Methods, systems, and computer readable media for utilizing network function identifiers to implement ingress message rate limiting are disclosed. The invention is set out in the appended claims. One example method includes, at a network node, receiving a service request message from a service consumer network function and extracting, from the received service request message, an access token that includes a consumer network function instance identifier identifying the service consumer network function. The method further includes determining, using the consumer network function instance identifier, that an allowed ingress message rate associated with the service consumer network function has been reached or exceeded, wherein the determining, using the consumer network function instance identifier, that an allowed ingress message rate associated with the service consumer network function has been reached or exceeded includes querying a data store or database that contains current ingress message rates and allowed message rates indexed by or associated with the consumer network function instance identifier, and in response to determining that the allowed ingress message rate associated with the service consumer network function has been reached or exceeded, performing a message rate limiting action, wherein the message rate limiting action includes discarding the service request message.

According to an aspect of the subject matter described herein, a method wherein the service request message is a service based interface (SBI) service request message.

According to an aspect of the subject matter described herein, a method wherein the consumer network function instance identifier is contained in a subject claim of the access token.

According to an aspect of the subject matter described herein, a method wherein the network node is further configured to extract a consumer public land mobile network (PLMN) identifier from a consumer PLMN claim in the access token.

According to an aspect of the subject matter described herein, a method the network node includes a security edge protection proxy (SEPP), a service producer network function, or a service communication proxy (SCP).

According to an aspect of the subject matter described herein, a method wherein determining that the allowed ingress message rate associated with the service consumer network function has been reached or exceeded comprises obtaining the allowed ingress message rate associated with the service consumer network function; obtaining a current ingress message rate associated with the service consumer network function; and comparing the current ingress message rate and the allowed ingress message rate for determining that the current ingress message rate meets or exceeds the allowed ingress message rate.

According to an aspect of the subject matter described herein, a method the message rate limiting action includes generating or modifying a throttle rate for discarding a portion of ingress messages or notifying a network operator or a management system.

One example system for ingress message rate limiting includes a network node comprising at least one processor and a memory. The network node is configured for wherein the network node is configured for: receiving a service request message from a service consumer network function; extracting, from the received service request message, an access token that includes a consumer network function instance identifier identifying the service consumer network function; determining, using the consumer network function instance identifier, that an allowed ingress message rate associated with the service consumer network function has been reached or exceeded, wherein the determining, using the consumer network function instance identifier, that an allowed ingress message rate associated with the service consumer network function has been reached or exceeded includes querying a data store or database that contains current ingress message rates and allowed message rates indexed by or associated with the consumer network function instance identifier; and in response to determining that the allowed ingress message rate associated with the service consumer network function has been reached or exceeded, performing a message rate limiting action, wherein the rate limiting action includes discarding the service request message.

According to an aspect of the subject matter described herein, a system wherein the service request message is a service based interface (SBI) service request message.

According to an aspect of the subject matter described herein, a system wherein the consumer network function instance identifier is contained in a subject claim of the access token.

According to an aspect of the subject matter described herein, a system wherein the network node is further configured to extract a consumer public land mobile network (PLMN) identifier from a consumer PLMN claim in the access token.

According to an aspect of the subject matter described herein, a system wherein the network node includes a security edge protection proxy (SEPP), a service producer network function, or a service communication proxy (SCP).

According to an aspect of the subject matter described herein, a system wherein determining that the allowed ingress message rate associated with the service consumer network function has been reached or exceeded comprises: obtaining the allowed ingress message rate associated with the service consumer network function; obtaining a current ingress message rate associated with the service consumer network function; and comparing the current ingress message rate and the allowed ingress message rate for determining that the current ingress message rate meets or exceeds the allowed ingress message rate.

According to an aspect of the subject matter described herein, a system wherein the message rate limiting action includes generating or modifying a throttle rate for discarding a portion of ingress messages or notifying a network operator or a management system.

One example non-transitory computer readable medium comprising computer executable instructions embodied in the non-transitory computer readable medium that when executed by at least one processor of at least one computer cause the at least one computer to perform steps comprising: at a network node, receiving a service request message from a service consumer network function and extracting, from the received service request message, an access token that includes a consumer network function instance identifier identifying the service consumer network function. The steps further include determining, using the consumer network function instance identifier, that an allowed ingress message rate associated with the service consumer network function has been reached or exceeded, wherein the determining, using the consumer network function instance identifier, that an allowed ingress message rate associated with the service consumer network function has been reached or exceeded includes querying a data store or database that contains current ingress message rates and allowed message rates indexed by or associated with the consumer network function instance identifier, and in response to determining that the allowed ingress message rate associated with the service consumer network function has been reached or exceeded, performing a message rate limiting action, wherein the rate limiting action includes discarding the service request message.

The subject matter described herein may be implemented in hardware, software, firmware, or any combination thereof. As such, the terms "function" "node" or "module" as used herein refer to hardware, which may also include software and/or firmware components, for implementing the feature being described. In one example implementation, the subject matter described herein may be implemented using a computer readable medium having stored thereon computer executable instructions that when executed by the processor of a computer control the computer to perform steps such as any one or more steps of the invention. Example computer readable media suitable for implementing the subject matter described herein include non-transitory computer-readable media, such as disk memory devices, chip memory devices, programmable logic devices, and application specific integrated circuits. In addition, a computer readable medium that implements the subject matter described herein may be located on a single device or computing platform or may be distributed across multiple devices or computing platforms.

### BRIEF DESCRIPTION OF THE DRAWINGS

The subject matter described herein will now be explained with reference to the accompanying drawings of which:
Figure 1 is a network diagram illustrating an example 5G core network architecture;
Figure 2 is a block diagram illustrating example message signaling received by a service producer network function from service consumer network functions;
Figure 3 is a message flow diagram illustrating a Figure 3 is a message flow diagram illustrating an access token request procedure;
Figure 4 depicts an exemplary encoded access token and corresponding decoded access token;
Figure 5 is a message flow diagram illustrating an example of ingress message rate limiting executed by a message rate limiting engine;
Figure 6 is a diagram illustrating an example network node configured for ingress message rate limiting;
Figure 7 is a diagram illustrating an example message throttling rate related record database; and
Figure 8 is a flow chart illustrating an example process for utilizing network function identifiers to implement ingress message rate limiting.

### DETAILED DESCRIPTION

Reference will now be made in detail to various embodiments of the subject matter described herein, examples of which are illustrated in the accompanying drawings. Wherever possible, the same reference numbers will be used throughout the drawings to refer to the same or like parts.

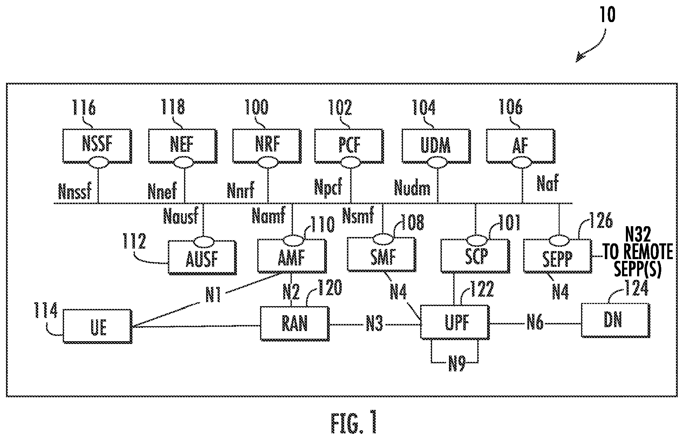

Figure 1 is a block diagram illustrating an example 5G system network architecture **10,** e.g., a home 5G core (5GC) network. The architecture **10** in Figure 1 includes a network function repository function (NRF) **100** and SCP **101,** which may be located in the same home public land mobile network (PLMN). As described above, NRF **100** may maintain profiles of available producer network function (NF) service instances and their supported services and allow consumer NFs or SCPs to subscribe to and be notified of the registration of new/updated producer NF service instances. SCP **101** may also support service discovery and selection of producer NF instances. SCP **101** may perform load balancing of connections between consumer and producer NFs. In addition, using the methodologies described herein, SCP **101** may perform preferred NF location based selection and routing.

NRF **100** is a repository for NF or service profiles of producer NF instances. In order to communicate with a producer NF instance, a consumer NF or an SCP must obtain the NF or service profile or the producer NF instance from NRF **100.** The NF or service profile is a JavaScript object notation (JSON) data structure defined in Third Generation Partnership Project (3GPP) Technical Specification (TS) 29.510. The NF or service profile definition includes at least one of a fully qualified domain name (FQDN), an Internet protocol (IP) version 4 (IPv4) address or an IP version 6 (IPv6) address. In Figure 1, any of the nodes (other than NRF **100**) can be either consumer NFs or producer NFs, depending on whether they are requesting or providing services. In the illustrated example, the nodes include a policy control function (PCF) **102** that performs policy related operations in a network, a unified data management (UDM) function **104** that manages user data, and an application function (AF) **106** that provides application services. The nodes illustrated in Figure 1 further include a session management function (SMF) **108** that manages sessions between access and mobility management function (AMF) **110** and PCF **102.** AMF **110** performs mobility management operations similar to those performed by a mobility management entity (MME) in 4G networks. An authentication server function (AUSF) **112** performs authentication services for user equipment (UEs), such as user equipment (UE) **114,** seeking access to the network.

A network slice selection function (NSSF) **116** provides network slicing services for devices seeking to access specific network capabilities and characteristics associated with a network slice. A network exposure function (NEF) **118** provides application programming interfaces (APIs) for application functions seeking to obtain information about Internet of things (IoT) devices and other UEs attached to the network. NEF **118** performs similar functions to the service capability exposure function (SCEF) in 4G networks.

A radio access network (RAN) **120** connects user equipment (UE) **114** to the network via a wireless link. Radio access network **120** may be accessed using a g-Node B (gNB) (not shown in Figure 1) or other wireless access point. A user plane function (UPF) **122** can support various proxy functionality for user plane services. One example of such proxy functionality is multipath transmission control protocol (MPTCP) proxy functionality. UPF **122** may also support performance measurement functionality, which may be used by UE **114** to obtain network performance measurements. Also illustrated in Figure 1 is a data network (DN) **124** through which UEs access data network services, such as Internet services.

Security edge protection proxy (SEPP) **126** filters incoming traffic from another PLMN and performs topology hiding for traffic exiting the home PLMN. SEPP **126** may communicate with an SEPP in a foreign PLMN which manages security for the foreign PLMN. Thus, traffic between NFs in different PLMNs may traverse two SEPP functions, one for the home PLMN and the other for the foreign PLMN.

SEPP **126** may utilize an N32-c interface and an N32-f interface. An N32-c interface is a control plane interface between two SEPPs usable for performing an initial handshake (e.g., a TLS handshake) and negotiating various parameters for an N32-f interface connection and related message forwarding. An N32-f interface is a forwarding interface between two SEPPs usable for forwarding various communications (e.g., 5GC service requests and responses) between a consumer NF and a producer NF after applying application level security protection.

One potential issue with the existing 5G architecture is that a consumer NF can trigger a signaling storm by sending a significant number of service requests messages to a producer NF, SEPP, or SCP in a home PLMN. While the receiving producer NF, SEPP, or SCP in the home network can initiate a global message rate limiting process to reduce or mitigate consequences of the signaling storm from the culprit consumer NF, global message rate limiting can similarly discard messages from legitimate consumer NFs and SEPPS that are not responsible for or associated with the signaling storm at an equal rate.

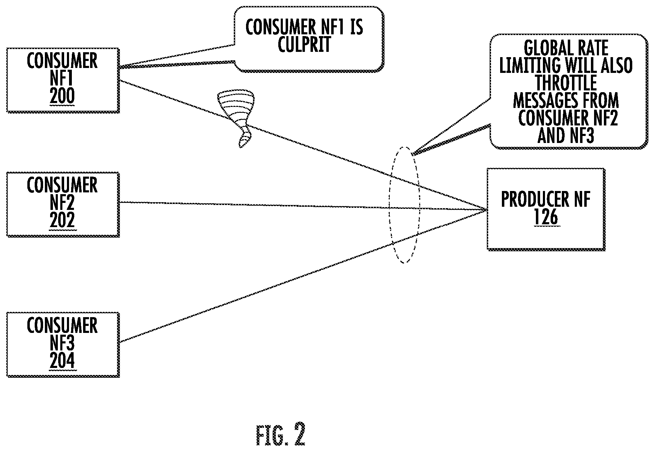

Figure 2 is a diagram depicting the signaling connections existing between each of a plurality of service consumer network functions **200-204** and a service producer network function **126.** In some embodiments, service producer network function **126** requires some manner of ingress rate limiting in order to protect itself against excessive 5GC signaling from subscribed consumer network functions. For example, service producer network function **126** may be configured with a global rate limiting functionality that serves to throttle or limit the number of ingress messages received from the consumer network functions. As shown in Figure 2, producer network function **126** may be configured to receive signaling messages from multiple consumer network functions **200-204.** Out of the multiple consumer network functions that are sending messages, one or more consumer functions may be sending an excess number of signaling messages which causes the producer network function **126** to initiate a message throttling mechanism that manages the ingress rate of messages received at the producer network function **126.** While global message rate limiting measures can mitigate the negative effects of a signaling storm from a particular consumer network function (e.g., consumer network function **200**), such rate limiting may also unfairly discard or throttle traffic associated with legitimate consumer network functions (e.g., consumer network functions **202-204**) that are not responsible for or associated with the signaling storm. As shown in Figure 2, the global rate limiting mechanism executed by the producer network function will throttle all incoming messages and improperly throttle consumer network functions (e.g., consumer network functions **202-204**) that are sending messages in accordance with a permissible limit or threshold. As such, consumer network functions **202-204** are throttled to the same degree as the culprit consumer network function (e.g., consumer network function **200**).

In some embodiments of the disclosed subject matter, a network node can be provisioned with a message rate limiting engine (as discussed in further detail below). Notably, a message rate limiting engine can be configured to maintain monitor a current messaging rate originating from a particular consumer network function and determine if that rate exceeds a permissible threshold. To accomplish this, the message rate limiting engine at a network node can be configured to recognize an access token (and an included consumer network function instance identifier) that may be stored in an HTTP and/or JSON message header of a service access message sent by a consumer network function. In some embodiments, the access token may be an OAuth2 access token that is requested from an authorization server, such as an NRF.

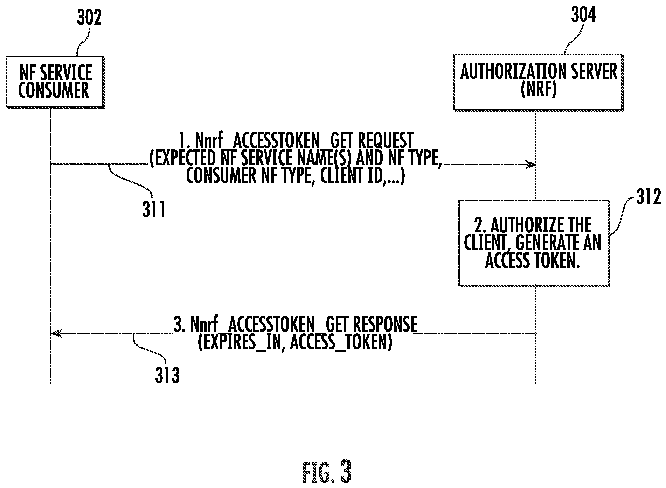

Figure 3 is a message flow diagram illustrating an access token request procedure that is conducted by a consumer network function. Referring to Figure 3, a service consumer network function 302 may send an access token request message **311** to an authorization server **304** (e.g., an NRF). In particular, request message **311** comprises an Nnrf_AcessToken_Get Request message that specifies an expected NF service name and NF type, the service consumer network function type, a client identifier, and the like. Upon receiving request message **311,** authorization server **304** is configured to authorize the requesting client (i.e., service consumer network function **302**) and generate a unique encoded access token (e.g., OAuth2 access token) for that client. After generating the encoded access token, authorization server **304** generates and sends a response message **313** that is directed to service consumer network function **302.** In particular, response message **313** may include an Nnrf_AccessToken_Get Response message that includes the encoded access token generated by the authorization server and its corresponding expiration time.

Once service consumer network function **302** obtains the necessary service access authorization by successfully fetching the access token, service consumer network function **302** can be configured to include the acquired access token in a network function service request message (e.g., an SBI service request message) to the service producer network function. Specifically, the service consumer network function can embed an encoded access token in the network function service request message that is sent to the service producer network function. In response to receiving the network function service request message, the service producer network function is configured to extract the encoded access token from the service request message. In particular, the service producer network function can be adapted to verify the integrity and the claims contained in the access token. If the claims and integrity in the access token are successfully verified, the service producer network function is configured to permit access to the requested service to the service consumer network function. Namely, the service producer network function may be configured to send a network function service response message to the service consumer network function that indicates that the requested service is authorized and will be accessible.

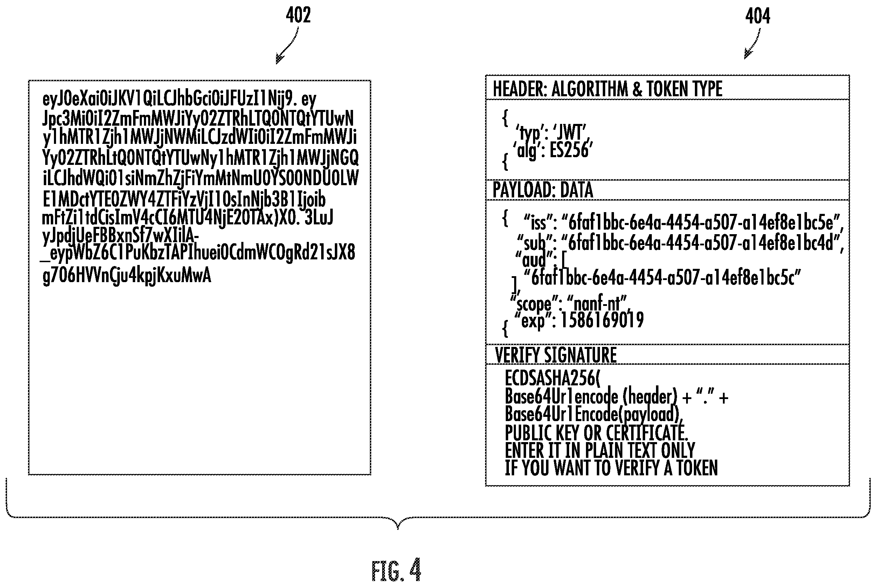

Figure 4 depicts an exemplary encoded access token **402** and decoded access token **404.** Notably, encoded access token **402** is received in this form by the consumer network function from an authorization server or NRF. Encoded access token **402** is further used in an HTTP header of service request messages generated and sent by consumer network functions. The encoded access token is ultimately decoded by a receiving producer network function and/or its message rate limiting engine as discussed further below.

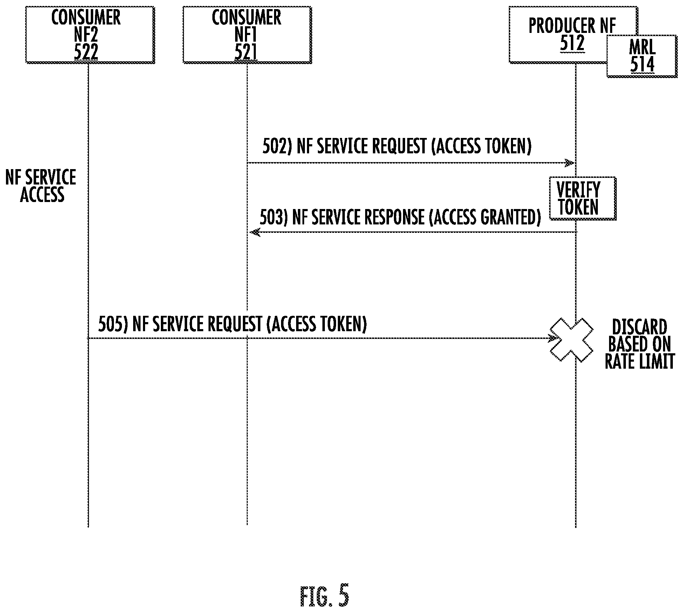

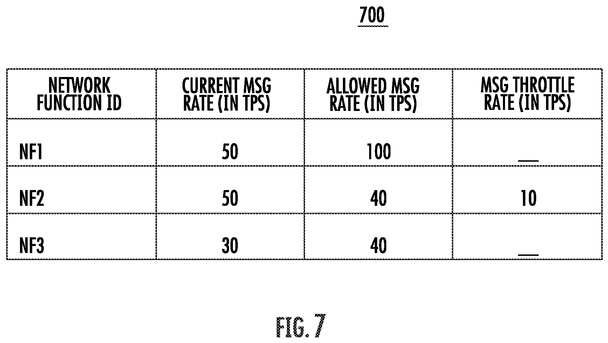

Figure 5 depicts a message signaling diagram that illustrates an exemplary rate limiting technique that is performed by a message rate limiting engine **514.** As shown in Figure 5, message rate limiting engine **514** is hosted by service producer network function **512.** In alternate embodiments, message rate limiting engine **514** is hosted by a SEPP or SCP node. Figure 5 further illustrates a pair of consumer network functions **521-522.** As shown in Figure 5, service producer network function **512** can be configured with a record database (e.g., see record database **700** as discussed below and shown in Figure 7) that may contain a plurality of record entries that respectively correspond to service consumer network functions that have communicated with the service producer network function (or host of the message rate limiting engine **514).**

As shown in Figure 5, service producer network function **512** receives a NF service request message **502** from service consumer network function **521.** Notably, service request message **502** includes an encoded access token that was previously obtained by service consumer network function **521** (e.g., from an NRF as described above with regard to Figure 3). Moreover, the access token includes a plurality of claims, any of which can be accessed by the message rate limiting engine **514.** For example, one claim in the access token is a subject claim that contains a consumer network function instance identifier that identifies the sending consumer network function **521.** Another accessible claim in the access token includes a consumer PLMN identifier. Although the following description primarily describes the access and extraction of identifier data from the subject claim and the consumer PLMN claim, any claim included in the access token may be accessed by the message rate limiting engine for identification information that can be used for rate-limiting purposes without departing from the scope to the disclosed subject matter.

After receiving service request message **502** and the access token, service producer network function **512** and/or the message rate limiting engine **514** is configured to decode the encoded access token and initiate an access token verification and service authorization procedure (see block **503**). For example, message rate limiting engine **514** may be configured to verify the integrity of the claims included in the access token. Notably, message rate limiting engine **514** is configured to obtain the consumer network function instance identifier that uniquely identifies the consumer network function **521** from the subject claim of the decoded access token (and/or obtain a consumer PLMN identifier that uniquely identifies a consumer PLMN from the consumer PLMN claim of the decoded access token). Once the consumer network function instance identifier is obtained, message rate limiting engine **514** is configured to utilize the consumer network function instance identifier to cross-reference the entries of the record database. In particular, the record database may include network function identifiers (and/or consumer PLMN identifiers, consumer NF group identifiers, or the like) and associated message rate limiting parameters (e.g., as shown in Figure 7). By comparing the consumer network function instance identifier with one or more of the consumer network function identifiers included in the entries of the record database, message rate limiting engine **514** is able to determine any existing messaging restrictions placed on the particular service consumer network function **521.** For example, message rate limiting engine **514** may access the record database and determine various messaging information pertaining to service consumer network function, such as the current messaging rate performed by network function **521,** a predefined allowed message rate for network function **521,** and a message throttle rate that is currently applied (if applicable) to the sending service consumer network function. In the event that message rate limiting engine **514** verifies the integrity of the access token and further determines that service consumer network function **521** is communicating in a manner that adheres to an acceptable ingress message rate for the producer network function **512,** message rate limiting engine **514** will send a service response message to the consumer network function **521** that indicates that access to the requested service has been granted. Further, message rate limiting engine **514** will continue to permit consumer network function **521** to communicate with producer network function **512** without executing any message rate limiting or throttling actions.

In a second scenario illustrated in Figure 5, service consumer network function **522** sends its own network function service request message to service producer network function **512.** Similar to message **502** indicated above, service request message **505** includes an encoded access token that was previously obtained by service consumer network function **522** (e.g., from an NRF). Further, the encoded access token also includes a plurality of accessible claims, one of which is a subject claim that contains a consumer network function instance identifier that uniquely identifies the sending consumer network function **522.** Another accessible claim is a consumer PLMN claim that contains a consumer PLMN identifier that uniquely identifies a sending consumer PLMN.

After receiving service request message **505** and the access token, service producer network function **512** and/or the message rate limiting engine **514** is configured to decode the access token and initiate the access token verification and service authorization procedure (similar to block **503**). For example, message rate limiting engine **514** may be configured to verify the integrity of the claims in the received access token. Notably, message rate limiting engine **514** is configured to obtain the consumer network function instance identifier that uniquely identifies the consumer network function **523** from the subject claim of the access token (and/or the consumer PLMN identifier from the consumer PLMN claim). Once the consumer network function instance identifier is obtained, message rate limiting engine **514** is configured to utilize the network function instance identifier to cross-reference the entries of the record database. By comparing the consumer network function instance identifier with one or more of the network function identifiers included in the entries of the record database, message rate limiting engine **514** is able to determine any messaging restrictions placed on the particular service consumer network function **522.** For example, message rate limiting engine **514** may access the record database and determine that a message throttle rate is currently being applied to the sending service consumer network function. In the event that message rate limiting engine **514** determines that service consumer network function **521** is subjected to a throttling rate for ingress messages to producer network function **512,** message rate limiting engine **514** will execute a message rate limiting or throttling actions. For example, message rate limiting engine **514** may be configured to discard a number of messages send by consumer network function **522** based on an established rate limit that is predefined in the record database. More specifically, message rate limiting engine **514** can restrict ingress messaging to the producer network function **512** from service consumer network function **522** to a particular messaging throttle rate (e.g., 10 TPS) as defined in the record database (see, e.g., database **700** in Figure 7).

It will be appreciated that Figure 5 is for illustrative purposes and that different and/or additional messages and/or actions may be used. It will also be appreciated that various messages and/or actions described herein may occur in a different order or sequence.

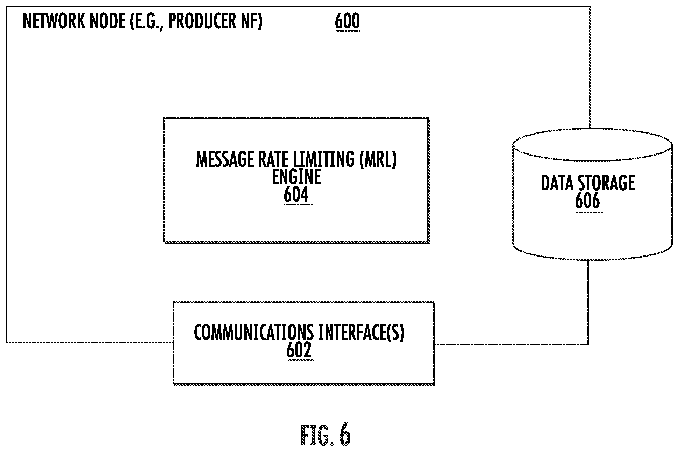

Figure 6 is a diagram illustrating an example network node **600** configured for utilizing network function identifiers to implement ingress message rate limiting. Network node **600** may represent any suitable entity or entities for performing aspects of ingress message rate limiting. In some embodiments, node **600** may represent or include one or more 5GC network functions, e.g., a service producer network function, a SEPP, an SCP, or the like. In some embodiments, network node **600** may represent or include a network gateway, a network proxy, an edge security device, or any related computing device that is configured to host a NF, SEPP, and/or SCP node or functionality. In some embodiments, network node 600 may include any producer network function, such as an NRF, PCF, BSF, NSSF, NEF, UDM/AUSF, UDR, UDSF, and the like.

In some embodiments, network node **600** or a related module may be configured (e.g., via programming logic) to perform ingress message rate limiting on 5GC service request messages based on a consumer network function instance identifier that corresponds with the originating service consumer network function. By performing ingress message rate limiting in this manner, network node **600** (e.g., a service producer network function) is able to reduce or mitigate the impact of incoming 5GC request signaling storms on the network node or other downstream network functions in the home network. For example, network node **600** or a related module may be configured to identify a consumer network function instance identifier included in an access token (e.g., OAuth2 access token). More specifically, the consumer network function instance identifier is included in a subject claim that is contained within the access token. In some embodiments, the network node, message rate limiting engine, or related module is further configured to extract a consumer PLMN identifier from a consumer PLMN claim in the access token. As described below, this consumer PLMN identifier can be used by the network node and/or message rate limiting engine to execute a rate limiting procedure on the sending consumer PLMN.

In some embodiments, the network node and/or message rate limiting engine is configured to group multiple service consumer network functions for rate limiting purposes. In such scenarios, the network node and/or message rate limiting engine will require some configuration conducted by a network operator or administrator for enabling the grouping of the consumer NFs.

Referring to Figure 6, network node **600** may include one or more communications interface(s) **602** for communicating messages via a communications environment, e.g., a home 5GC network. In some embodiments, communications interface(s) **602** may include a first communication interface for communicating with one or more service consumer network functions and/or SEPPs in a first network, a second communications interface for communicating with one or more service consumer network functions and/or SEPPs in a second network, and a third communications interface for communicating with one or more service consumer network functions and/or SEPPs in a home network, e.g., a home 5GC network.

Network node **600** may include a message rate limiting (MRL) engine 604. Message rate limiting engine **604** may be any suitable entity (e.g., software executing on at least one processor) for performing one or more aspects of disclosed ingress message rate limiting. In some embodiments, message rate limiting engine **604** may include functionality for obtaining, from a service request message sent from a service consumer network function, a consumer network function instance identifier identifying the originating service consumer network function and using the network function instance identifier to perform ingress message rate limiting functions at the network node **600.** For example, obtaining a consumer network function instance identifier from a 5GC signaling message may include obtaining the instance identifier from an HTTP header contained in an access token included in the 5GC-based network function service request message.

In this example, for each 5GC service request message received by network node **600,** message rate limiting engine **604** may determine, using the consumer network function instance identifier, whether an allowed ingress message rate associated with the sending consumer network function instance identifier has reached or exceeded a predefined threshold value. In response to determining that the allowed ingress message rate associated with the network function instance identifier has reached or exceeded the threshold value, message rate limiting engine **604** may perform a message rate limiting action. Examples of rate limiting actions may include discarding a received request message, generating or modifying a throttle rate for discarding a portion of ingress messages sent by a particular consumer service network function, and/or notifying a network operator or a management system regarding an ingress message rate or related event.

In some embodiments, message rate limiting engine **604** may be configured for determining whether to perform ingress message rate limiting by obtaining an allowed ingress message rate associated with a consumer service network function, obtaining a current ingress message rate associated with the consumer service network, function, and comparing the current ingress message rate and the allowed ingress message rate. If the current ingress message rate meets or exceeds the allowed ingress message rate, then a message rate limiting action may be performed. If the current ingress message rate meets or exceeds the allowed ingress message rate, then message rate limiting engine **604** may allow the message to be handled or processed, e.g., without ingress message rate limiting.

In some embodiments, network node **600** may access (e.g., read from and/or write information to) data storage **606.** Data storage **606** may be any suitable entity (e.g., a computer readable medium or memory) for storing various data. In some embodiments, data storage **606** may include logic for obtaining identifiers from access tokens, logic for checking whether to perform ingress message rate limiting, logic for implementing or triggering a message rate limiting action, and logic for tracking current ingress message rates associated with various originating entities (e.g., consumer service network function instant identifiers, PLMN IDs, etc.).

In some embodiments, data storage **606** may include message rate limiting data. For example, data storage **606** may include information for identifying a current message rate, an allowed message rate, and/or a message throttle rate for various consumer network functions or network nodes therein. In this example, related message rates and throttle rates may be indexed or otherwise identified using an identifier obtained from a 5GC service request message or an access token therein. Data store **606** may further be configured to store a record database, such as record database **700** shown in Figure 7.

Figure 7 is a diagram that depicts example message rate related data stored in a record database **700.** Record database **700** may include information for identifying a current message rate, an allowed message rate, and/or a message throttle rate for various network functions and/or network nodes therein. For example, each rate in record database **700** may represent a number of messages, requests, or transactions per a time period, e.g., transactions per second (TPS).

Referring to Figure 7, a table representing record database **700** comprises columns and/or fields for network and/or network function instance IDs, current message rates, allowed message rates, and message throttle rate. A network function identifier field may store information for representing a network function or an associated host network node. In some embodiments, record database **700** may include a consumer PLMN identifier field that can be used to conduct message rate limiting on a particular consumer PLMN. Similarly, in some embodiments, record database **700** may include a consumer NF group identifier field that can be used to conduct message rate limiting on a particular grouping of service consumer network functions.

A current message rate field may store information for representing a measured or tracked message rate associated with one or more messages, types of messages, or transactions. For example, a current message rate (e.g., 50 TPS) may indicate a measured rate of 5GC service request messages or transactions received from a particular consumer network function.

An allowed message rate field may store information for representing a predetermined allowed message rate associated with one or more messages, types of messages, or transactions. For example, an allowed message rate (e.g., 40 TPS) may indicate a rate of 5GC service request messages or transactions received from a particular consumer network function that a network node (e.g., a producer network node, SCP, or SEPP) is configured to allow, e.g., without performing a message rate limiting action.

A message throttle rate field may store information for representing a message throttle rate associated with one or more messages, types of messages, or transactions. For example, a message throttle rate may indicate a rate of inter-5GC service request messages or transactions received from a particular consumer network function that a network node (e.g., a producer network node, SCP, or SEPP) is to throttle or discard. In this example, a throttle rate may be based on the difference between a current message rate and an allowed message rate, e.g., 50 TPS - 40 TPS = 10 TPS.

It will also be appreciated that record database **700** is for illustrative purposes and that different and/or additional data than the data depicted in Figure 7 may be usable for indicating default values for particular data portions or other information. Further, record database **700** may be stored (e.g., in a database record in data storage **606** as shown in Figure 6) or managed using various data structures and/or computer readable media.

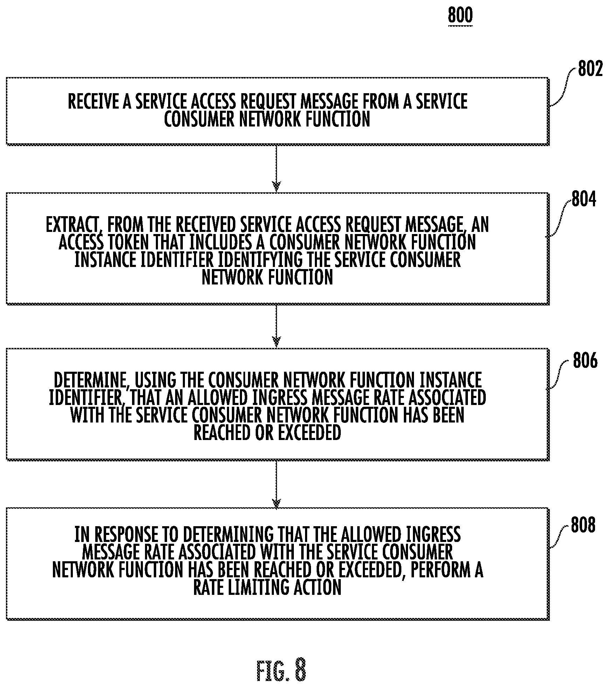

Figure 8 is a diagram illustrating an example process **800** for ingress message rate limiting. In some embodiments, example process **800** described herein, or portions thereof, may be performed at or performed by network node **600,** message rate limiting engine **604,** and/or another module or node.

In step **802,** a 5GC service request message is received from a service consumer network function. In some embodiments, the request message is received by a network node, such as an SEPP, SCP, a producer NF, or any other node comprising message rate limiting engine **604** in a home 5GC network.

In step **804,** an access token that includes a consumer network function instance identifier is extracted from the received 5GC service request message. In some embodiments, the message rate limiting engine obtains the consumer network function instance identifier contained in a claim of the access token. Notably, the consumer network function instance identifier uniquely identifies the sending service consumer network function. In some embodiments, the network node and/or message rate limiting engine extracts a consumer PLMN identifier from a consumer PLMN claim in the access token.

In step **806,** it may be determined, using the consumer network function instance identifier, that an allowed ingress message rate associated with the sending service consumer network function has been reached or exceeded. For example, a producer network function may utilize a consumer network function instance identifier obtained from the access token (see step **804**) associated with an originating service consumer network function to determine whether the messages sent by a particular service consumer network function is reaching or exceeding an ingress message rate. In this example, producer network function may query a data store or database that contains current ingress message rates and allowed message rates indexed by or associated with relevant identifiers (e.g., a consumer network function instance identifier). In some embodiments, an extracted consumer PLMN identifier can be used by the network node and/or message rate limiting engine to determine if an allowed ingress message rate associated with the sending consumer PLMN has been reached or exceeded.

In some embodiments, determining that an allowed ingress message rate associated with a particular sending service consumer network function has been reached or exceeded may comprise i) obtaining the allowed ingress message rate associated with the service consumer network function, ii) obtaining a current ingress message rate associated with the service consumer network function, and iii) comparing the current ingress message rate and the allowed ingress message rate for determining that the current ingress message rate meets or exceeds the allowed ingress message rate.

In step **808,** in response to determining that the allowed ingress message rate associated with the service consumer network function has been reached or exceeded, a message rate limiting action may be performed. In some embodiments, a message rate limiting action performed by the producer network function and/or the message rate limiting engine may include discarding a request message, generating or modifying a throttle rate for discarding a portion of messages, or notifying a network operator or a management system. In some embodiments, a message rate limiting action may be performed by the network node and/or the message rate limiting engine in response to determining that the allowed ingress message rate associated with the sending consumer PLMN has been reached or exceeded.

It will be appreciated that process **800** is for illustrative purposes and that different and/or additional actions may be used. It will also be appreciated that various actions described herein may occur in a different order or sequence.

It will be appreciated that while some aspects of the subject matter described herein has been discussed with reference to 5G networks various other networks may utilize some aspects of the subject matter described herein. For example, any network that utilize certificates that identify senders or related networks may use features, mechanisms and techniques described herein to perform more selective message rate limiting.

It should be noted that network node **600,** message rate limiting engine **604,** and/or functionality described herein (e.g., as shown in Figure 6) may constitute a special purpose computing device. Further, node **600,** message rate limiting engine **604,** and/or functionality described herein can improve the technological field of network security and/or message rate limiting at a producer network function, SEPP, SCP, or other network node. For example, by performing ingress message rate limiting based on a consumer NF identifier, malicious activities (e.g., signaling traffic storms) and their negative consequences (e.g., network congestion, service failures, and/or poor user experience) can be mitigated and/or prevented.

### References:

1. 3GPP TS 33.501; 3rd Generation Partnership Project; Technical Specification Group Services and System Aspects; Security Architecture and Procedures for the 5G System; (Release 16), V16.3.0 (2020-07).
2. 3GPP TS 29.510; 3rd Generation Partnership Project; Technical Specification Group Core Network and Terminals; 5G System; Network Function Repository Services; Stage 3 (Release 16), V16.4.0 (2020-07).

## Claims

1. A method (800) for utilizing network function identifiers to implement ingress message rate limiting, the method comprising:
at a network node (600):
receiving (802) a service request message from a service consumer network function;
extracting (804), from the received service request message, an access token that includes a consumer network function instance identifier identifying the service consumer network function;
determining (806), using the consumer network function instance identifier, that an allowed ingress message rate associated with the service consumer network function has been reached or exceeded, wherein the determining (806), using the consumer network function instance identifier, that an allowed ingress message rate associated with the service consumer network function has been reached or exceeded includes querying a data store or database that contains current ingress message rates and allowed message rates indexed by or associated with the consumer network function instance identifier; and
in response to determining (806) that the allowed ingress message rate associated with the service consumer network function has been reached or exceeded, performing (808) a message rate limiting action, wherein the message rate limiting action includes discarding the service request message.

2. The method (800) of claim 1 wherein the service request message is a service based interface, SBI, service request message.

3. The method (800) of claim 1 or claim 2 wherein the consumer network function instance identifier is contained in a subject claim of the access token.

4. The method (800) of any preceding claim wherein the network node is further configured to extract a consumer public land mobile network, PLMN, identifier from a consumer PLMN claim in the access token.

5. The method (800) of any preceding claim wherein the network node includes a security edge protection proxy, SEPP (126), a service producer network function, or a service communication proxy, SCP (101).

6. The method (800) of any preceding claim wherein determining that the allowed ingress message rate associated with the service consumer network function has been reached or exceeded comprises:
obtaining the allowed ingress message rate associated with the service consumer network function;
obtaining a current ingress message rate associated with the service consumer network function; and
comparing the current ingress message rate and the allowed ingress message rate for determining that the current ingress message rate meets or exceeds the allowed ingress message rate.

7. The method (800) of any preceding claim wherein the message rate limiting action further includes generating or modifying a throttle rate for discarding a portion of ingress messages or notifying a network operator or a management system.

8. A system for utilizing network function identifiers to implement ingress message rate limiting, the system comprising:
a network node (600) comprising:
at least one processor; and
a memory,
wherein the network node (600) is configured for:
receiving (802) a service request message from a service consumer network function;
extracting (804), from the received service request message, an access token that includes a consumer network function instance identifier identifying the service consumer network function;
determining (806), using the consumer network function instance identifier, that an allowed ingress message rate associated with the service consumer network function has been reached or exceeded, wherein the determining (806), using the consumer network function instance identifier, that an allowed ingress message rate associated with the service consumer network function has been reached or exceeded includes querying a data store or database that contains current ingress message rates and allowed message rates indexed by or associated with the consumer network function instance identifier; and
in response to determining (806) that the allowed ingress message rate associated with the service consumer network function has been reached or exceeded, performing (808) a message rate limiting action, wherein the rate limiting action includes discarding the service request message.

9. The system of claim 8 wherein the service request message is a service based interface, SBI, service request message.

10. The system of claim 8 or claim 9 wherein the consumer network function instance identifier is contained in a subject claim of the access token.

11. The system of any one of claims 8 to 10 wherein the network node is further configured to extract a consumer public land mobile network, PLMN, identifier from a consumer PLMN claim in the access token.

12. The system of any one of claims 8 to 10 wherein the network node includes a security edge protection proxy, SEPP (126), a service producer network function, or a service communication proxy, SCP (101).

13. The system of any one of claims 8 to 12 wherein determining that the allowed ingress message rate associated with the service consumer network function has been reached or exceeded comprises:
obtaining the allowed ingress message rate associated with the service consumer network function;
obtaining a current ingress message rate associated with the service consumer network function; and
comparing the current ingress message rate and the allowed ingress message rate for determining that the current ingress message rate meets or exceeds the allowed ingress message rate.

14. The system of any one of claims 8 to 13 wherein the message rate limiting action further includes generating or modifying a throttle rate for discarding a portion of ingress messages or notifying a network operator or a management system.

15. A non-transitory computer readable medium having stored thereon executable instructions that when executed by a processor of a computer control the computer to perform steps comprising:
at a network node (600):
receiving (802) a service request message from a service consumer network function;
extracting (804), from the received service request message, an access token that includes a consumer network function instance identifier identifying the service consumer network function;
determining (806), using the consumer network function instance identifier, that an allowed ingress message rate associated with the service consumer network function has been reached or exceeded, wherein the determining (806), using the consumer network function instance identifier, that an allowed ingress message rate associated with the service consumer network function has been reached or exceeded includes querying a data store or database that contains current ingress message rates and allowed message rates indexed by or associated with the consumer network function instance identifier; and
in response to determining (806) that the allowed ingress message rate associated with the service consumer network function has been reached or exceeded, performing (808) a message rate limiting action, wherein the rate limiting action includes discarding the service request message.

## Patentansprüche

1. Verfahren (800) zur Verwendung von Netzwerkfunktionskennungen zur Implementierung einer Begrenzung der eingehenden Nachrichtenrate, wobei das Verfahren umfasst:
an einem Netzwerkknoten (600):
Empfangen (802) einer Dienstanforderungsnachricht von einer Netzwerkfunktion eines Dienstnutzers;
Extrahieren (804) eines Zugriffstokens aus der empfangenen Dienstanforderungsnachricht, wobei das Zugriffstoken eine Instanzkennung der Dienstnutzer-Netzwerkfunktion enthält, die die Dienstnutzer-Netzwerkfunktion identifiziert;
Bestimmen (806), unter Verwendung der Instanzkennung der Dienstnutzer-Netzwerkfunktion, dass eine der Dienstnutzer-Netzwerkfunktion zugeordnete zulässige Eingangsnachrichtenrate erreicht oder überschritten wurde, wobei das Bestimmen (806), unter Verwendung der Instanzkennung der Dienstnutzer-Netzwerkfunktion, dass eine der Dienstnutzer-Netzwerkfunktion zugeordnete zulässige Eingangsnachrichtenrate erreicht oder überschritten wurde, das Abfragen eines Datenspeichers oder einer Datenbank enthält, der bzw. die die aktuellen Eingangsnachrichtenraten und zulässigen Nachrichtenraten enthält, die anhand der Instanzkennung der Dienstnutzer-Netzwerkfunktion indiziert oder dieser zugeordnet sind; und
als Reaktion auf das Bestimmen (806), dass die der Dienstnutzer-Netzwerkfunktion zugeordnete zulässige Eingangsnachrichtenrate erreicht oder überschritten wurde, Durchführen (808) einer Maßnahme zur Begrenzung der Nachrichtenrate, wobei die Maßnahme zur Begrenzung der Nachrichtenrate die Dienstanforderungsnachricht enthält.

2. Verfahren (800) nach Anspruch 1, wobei die Dienstanforderungsnachricht eine Service Based Interface-, SBI, Dienstanforderungsnachricht ist.

3. Verfahren (800) nach Anspruch 1 oder Anspruch 2, wobei die Instanzkennung der Netzwerkfunktion des Nutzers in einem Subjekt-Claim des Zugriffstokens enthalten ist.

4. Verfahren (800) nach einem der vorhergehenden Ansprüche, wobei der Netzwerkknoten ferner so konfiguriert ist, dass er eine Public Land Mobile Network-, PLMN, Kennung des Nutzers aus einem PLMN-Anspruch des Nutzers im Zugriffstoken extrahiert.

5. Verfahren (800) nach einem der vorhergehenden Ansprüche, wobei der Netzwerkknoten einen Security Edge Protection Proxy, SEPP, (126), eine Netzwerkfunktion des Dienstanbieters oder einen Service Communication Proxy, SCP, enthält (101) umfasst.

6. Verfahren (800) nach einem der vorhergehenden Ansprüche, wobei das Bestimmen, dass die der Dienstnutzer-Netzwerkfunktion zugeordnete zulässige Eingangsnachrichtenrate erreicht oder überschritten wurde, umfasst:
Ermitteln der zulässigen Eingangsnachrichtenrate, die der Dienstnutzer-Netzwerkfunktion zugeordnet ist;
Ermitteln einer aktuellen Eingangsnachrichtenrate, die der Dienstnutzer-Netzwerkfunktion zugeordnet ist; und
Vergleichen der aktuellen Eingangsnachrichtenrate mit der zulässigen Eingangsnachrichtenrate, um zu bestimmen, dass die aktuelle Eingangsnachrichtenrate die zulässige Eingangsnachrichtenrate erreicht oder überschreitet.

7. Verfahren (800) nach einem der vorhergehenden Ansprüche, wobei die Maßnahme zur Begrenzung der Nachrichtenrate ferner das Erzeugen oder Ändern einer Drosselungsrate zum Verwerfen eines Teils der Eingangsnachrichten oder das Benachrichtigen eines Netzwerkbetreibers oder eines Managementsystems enthält.

8. System zur Verwendung von Netzwerkfunktionskennungen zur Implementierung einer Begrenzung der eingehenden Nachrichtenrate, wobei das System umfasst:
einen Netzwerkknoten (600), der umfasst:
mindestens einen Prozessor; und
einen Speicher,
wobei der Netzwerkknoten (600) für Folgendes konfiguriert ist:
Empfangen (802) einer Dienstanforderungsnachricht von einer Netzwerkfunktion eines Dienstnutzers;
Extrahieren (804) eines Zugriffstokens aus der empfangenen Dienstanforderungsnachricht, wobei das Zugriffstoken eine Instanzkennung der Dienstnutzer-Netzwerkfunktion enthält, die die Dienstnutzer-Netzwerkfunktion identifiziert;
Bestimmen (806), unter Verwendung der Instanzkennung der Dienstnutzer-Netzwerkfunktion, dass eine der Dienstnutzer-Netzwerkfunktion zugeordnete zulässige Eingangsnachrichtenrate erreicht oder überschritten wurde, wobei das Bestimmen (806), unter Verwendung der Instanzkennung der Dienstnutzer-Netzwerkfunktion, dass eine der Dienstnutzer-Netzwerkfunktion zugeordnete zulässige Eingangsnachrichtenrate erreicht oder überschritten wurde, das Abfragen eines Datenspeichers oder einer Datenbank enthält, der bzw. die die aktuellen Eingangsnachrichtenraten und zulässigen Nachrichtenraten enthält, die anhand der Instanzkennung der Dienstnutzer-Netzwerkfunktion indiziert oder dieser zugeordnet sind; und
als Reaktion auf das Bestimmen (806), dass die der Dienstnutzer-Netzwerkfunktion zugeordnete zulässige Eingangsnachrichtenrate erreicht oder überschritten wurde, Durchführen (808) einer Maßnahme zur Begrenzung der Nachrichtenrate, wobei die Maßnahme zur Begrenzung der Rate die Dienstanforderungsnachricht enthält.

9. System nach Anspruch 8, wobei die Dienstanforderungsnachricht eine Service Based Interface-, SBI, Dienstanforderungsnachricht ist.

10. Verfahren nach Anspruch 8 oder Anspruch 9 wobei die Instanzkennung der Netzwerkfunktion des Nutzers in einem Subjekt-Claim des Zugriffstokens enthalten ist.

11. System nach einem der Ansprüche 8 bis 10, wobei der Netzwerkknoten ferner so konfiguriert ist, dass er eine Public Land Mobile Network-, PLMN, Kennung des Nutzers aus einem PLMN-Anspruch des Nutzers im Zugriffstoken extrahiert.

12. System nach einem der Ansprüche 8 bis 10, wobei der Netzwerkknoten einen Security Edge Protection Proxy, SEPP, (126), eine Netzwerkfunktion des Dienstanbieters oder einen Service Communication Proxy, SCP, enthält (101) umfasst.

13. System nach einem der Ansprüche 8 bis 12, wobei das Bestimmen, dass die der Dienstnutzer-Netzwerkfunktion zugeordnete zulässige Eingangsnachrichtenrate erreicht oder überschritten wurde, umfasst:
Ermitteln der zulässigen Eingangsnachrichtenrate, die der Dienstnutzer-Netzwerkfunktion zugeordnet ist;
Ermitteln einer aktuellen Eingangsnachrichtenrate, die der Dienstnutzer-Netzwerkfunktion zugeordnet ist; und
Vergleichen der aktuellen Eingangsnachrichtenrate mit der zulässigen Eingangsnachrichtenrate, um zu bestimmen, dass die aktuelle Eingangsnachrichtenrate die zulässige Eingangsnachrichtenrate erreicht oder überschreitet.

14. System nach einem der Ansprüche 8 bis 13, wobei die Maßnahme zur Begrenzung der Nachrichtenrate ferner das Erzeugen oder Ändern einer Drosselungsrate zum Verwerfen eines Teils der Eingangsnachrichten oder das Benachrichtigen eines Netzwerkbetreibers oder eines Managementsystems enthält.

15. Nicht-flüchtiges, computerlesbares Medium, auf dem ausführbare Befehle gespeichert sind, die, wenn sie von einem Prozessor eines Computers ausgeführt werden, den Computer veranlassen, Schritte durchzuführen, die Folgendes umfassen: an einem Netzwerkknoten (600):
Empfangen (802) einer Dienstanforderungsnachricht von einer Netzwerkfunktion eines Dienstnutzers;
Extrahieren (804) eines Zugriffstokens aus der empfangenen Dienstanforderungsnachricht, wobei das Zugriffstoken eine Instanzkennung der Dienstnutzer-Netzwerkfunktion enthält, die die Dienstnutzer-Netzwerkfunktion identifiziert;
Bestimmen (806), unter Verwendung der Instanzkennung der Dienstnutzer-Netzwerkfunktion, dass eine der Dienstnutzer-Netzwerkfunktion zugeordnete zulässige Eingangsnachrichtenrate erreicht oder überschritten wurde, wobei das Bestimmen (806), unter Verwendung der Instanzkennung der Dienstnutzer-Netzwerkfunktion, dass eine der Dienstnutzer-Netzwerkfunktion zugeordnete zulässige Eingangsnachrichtenrate erreicht oder überschritten wurde, das Abfragen eines Datenspeichers oder einer Datenbank enthält, der bzw. die die aktuellen Eingangsnachrichtenraten und zulässigen Nachrichtenraten enthält, die anhand der Instanzkennung der Dienstnutzer-Netzwerkfunktion indiziert oder dieser zugeordnet sind; und
als Reaktion auf das Bestimmen (806), dass die der Dienstnutzer-Netzwerkfunktion zugeordnete zulässige Eingangsnachrichtenrate erreicht oder überschritten wurde, Durchführen (808) einer Maßnahme zur Begrenzung der Nachrichtenrate, wobei die Maßnahme zur Begrenzung der Rate die Dienstanforderungsnachricht enthält.

## Revendications

1. Procédé (800) servant à utiliser des identificateurs de fonction de réseau à des fins de mise en œuvre d'une limitation de débit de messages d'entrée, le procédé comportant les étapes consistant à :
au niveau d'un nœud de réseau (600) :
recevoir (802) un message de demande de service en provenance d'une fonction de réseau consommateur de service ;
extraire (804), à partir du message de demande de service reçu, un jeton d'accès qui comprend un identificateur d'instance de fonction de réseau consommateur identifiant la fonction de réseau consommateur de service ;
déterminer (806), à l'aide de l'identificateur d'instance de fonction de réseau consommateur, comme quoi un débit de messages d'entrée autorisé associé à la fonction de réseau consommateur de service a été atteint ou a été dépassé, dans lequel l'étape consistant à déterminer (806), à l'aide de l'identificateur d'instance de fonction de réseau consommateur, comme quoi un débit de messages d'entrée autorisé associé à la fonction de réseau consommateur de service a été atteint ou a été dépassé comprend l'étape consistant à interroger une mémoire de données ou une base de données qui contient les débits de messages d'entrée actuels et les débits de messages autorisés indexés par l'identificateur d'instance de fonction de réseau consommateur ou associés à celui-ci ; et
en réponse à l'étape consistant à déterminer (806) comme quoi le débit de messages d'entrée autorisé associé à la fonction de réseau consommateur de service a été atteint ou a été dépassé, effectuer (808) une action de limitation de débit de messages, dans lequel l'action de limitation de débit de messages comprend l'étape consistant à rejeter le message de demande de service.

2. Procédé (800) selon la revendication 1, dans lequel le message de demande de service est un message de demande de service SBI (service based interface - interface basée sur un service).

3. Procédé (800) selon la revendication 1 ou la revendication 2, dans lequel l'identificateur d'instance de fonction de réseau consommateur est contenu dans une revendication en cause du jeton d'accès.

4. Procédé (800) selon l'une quelconque des revendications précédentes, dans lequel le nœud de réseau est par ailleurs configuré pour extraire un identificateur de réseau PLMN (public land mobile network - réseau mobile terrestre public) consommateur, à partir d'une revendication de réseau PLMN consommateur dans le jeton d'accès.

5. Procédé (800) selon l'une quelconque des revendications précédentes, dans lequel le nœud de réseau comprend un mandataire SEPP (security edge protection proxy - mandataire de protection de bord de sécurité) (126), une fonction de réseau producteur ou un mandataire SCP (service communication proxy - mandataire de communications de service) (101).

6. Procédé (800) selon l'une quelconque des revendications précédentes, dans lequel l'étape consistant à déterminer comme quoi le débit de messages d'entrée autorisé associé à la fonction de réseau consommateur de service a été atteint ou a été dépassé comporte les étapes consistant à :
obtenir le débit de messages d'entrée autorisé associé à la fonction de réseau consommateur de service ;
obtenir un débit de messages d'entrée actuel associé à la fonction de réseau consommateur de service ; et
comparer le débit de messages d'entrée actuel et le débit de messages d'entrée autorisé afin de déterminer comme quoi le débit de messages d'entrée actuel atteint ou dépasse le débit de messages d'entrée autorisé.

7. Procédé (800) selon l'une quelconque des revendications précédentes, dans lequel l'action de limitation de débit de messages comprend par ailleurs l'étape consistant à générer ou à modifier un débit d'étranglement afin de supprimer une partie de messages d'entrée, ou l'étape consistant à notifier un opérateur de réseau ou un système de gestion.

8. Système servant à utiliser des identificateurs de fonction de réseau à des fins de mise en œuvre d'une limitation de débit de messages d'entrée, le système comportant :
un nœud de réseau (600) comportant :
au moins un processeur ; et
une mémoire,
dans lequel le nœud de réseau (600) est configuré pour :
recevoir (802) un message de demande de service en provenance d'une fonction de réseau consommateur de service ;
extraire (804), à partir du message de demande de service reçu, un jeton d'accès qui comprend un identificateur d'instance de fonction de réseau consommateur identifiant la fonction de réseau consommateur de service ;
déterminer (806), à l'aide de l'identificateur d'instance de fonction de réseau consommateur, comme quoi un débit de messages d'entrée autorisé associé à la fonction de réseau consommateur de service a été atteint ou a été dépassé, dans lequel l'étape consistant à déterminer (806), à l'aide de l'identificateur d'instance de fonction de réseau consommateur, comme quoi un débit de messages d'entrée autorisé associé à la fonction de réseau consommateur de service a été atteint ou a été dépassé comprend l'étape consistant à interroger une mémoire de données ou une base de données qui contient les débits de messages d'entrée actuels et les débits de messages autorisés indexés par l'identificateur d'instance de fonction de réseau consommateur ou associés à celui-ci ; et
en réponse à l'étape consistant à déterminer (806) comme quoi le débit de messages d'entrée autorisé associé à la fonction de réseau consommateur de service a été atteint ou a été dépassé, effectuer (808) une action de limitation de débit de messages, dans lequel l'action de limitation de débit de messages comprend l'étape consistant à rejeter le message de demande de service.

9. Système selon la revendication 8, dans lequel dans lequel le message de demande de service est un message de demande de service SBI (service based interface - interface basée sur un service).

10. Système selon la revendication 8 ou la revendication 9, dans lequel l'identificateur d'instance de fonction de réseau consommateur est contenu dans une revendication en cause du jeton d'accès.

11. Système selon l'une quelconque des revendications 8 à 10, dans lequel le nœud de réseau est par ailleurs configuré pour extraire un identificateur de réseau PLMN (public land mobile network - réseau mobile terrestre public) consommateur, à partir d'une revendication de réseau PLMN consommateur dans le jeton d'accès.

12. Système selon l'une quelconque des revendications 8 à 10, dans lequel le nœud de réseau comprend un mandataire SEPP (security edge protection proxy - mandataire de protection de bord de sécurité) (126), une fonction de réseau producteur ou un mandataire SCP (service communication proxy - mandataire de communications de service) (101).

13. Système selon l'une quelconque des revendications 8 à 12, dans lequel l'étape consistant à déterminer comme quoi le débit de messages d'entrée autorisé associé à la fonction de réseau consommateur de service a été atteint ou a été dépassé comporte les étapes consistant à :
obtenir le débit de messages d'entrée autorisé associé à la fonction de réseau consommateur de service ;
obtenir un débit de messages d'entrée actuel associé à la fonction de réseau consommateur de service ; et
comparer le débit de messages d'entrée actuel et le débit de messages d'entrée autorisé afin de déterminer comme quoi le débit de messages d'entrée actuel atteint ou dépasse le débit de messages d'entrée autorisé.

14. Système selon l'une quelconque des revendications 8 à 13, dans lequel l'action de limitation de débit de messages comprend par ailleurs l'étape consistant à générer ou à modifier un débit d'étranglement afin de supprimer une partie de messages d'entrée, ou l'étape consistant à notifier un opérateur de réseau ou un système de gestion.

15. Support non transitoire lisible par ordinateur ayant, stockées sur celui-ci, des instructions en mesure d'être exécutées qui, quand elles sont exécutées par un processeur d'un ordinateur, commandent l'ordinateur afin d'effectuer les étapes consistant à :
au niveau d'un nœud de réseau (600) :
recevoir (802) un message de demande de service en provenance d'une fonction de réseau consommateur de service ;
extraire (804), à partir du message de demande de service reçu, un jeton d'accès qui comprend un identificateur d'instance de fonction de réseau consommateur identifiant la fonction de réseau consommateur de service ;
déterminer (806), à l'aide de l'identificateur d'instance de fonction de réseau consommateur, comme quoi un débit de messages d'entrée autorisé associé à la fonction de réseau consommateur de service a été atteint ou a été dépassé, dans lequel l'étape consistant à déterminer (806), à l'aide de l'identificateur d'instance de fonction de réseau consommateur, comme quoi un débit de messages d'entrée autorisé associé à la fonction de réseau consommateur de service a été atteint ou a été dépassé comprend l'étape consistant à interroger une mémoire de données ou une base de données qui contient les débits de messages d'entrée actuels et les débits de messages autorisés indexés par l'identificateur d'instance de fonction de réseau consommateur ou associés à celui-ci ; et
en réponse à l'étape consistant à déterminer (806) comme quoi le débit de messages d'entrée autorisé associé à la fonction de réseau consommateur de service a été atteint ou a été dépassé, effectuer (808) une action de limitation de débit de messages, dans lequel l'action de limitation de débit de messages comprend l'étape consistant à rejeter le message de demande de service.
